# EUROPEAN PATENT APPLICATION

(11) **EP 1 575 287 A2**
(43) Date of publication of application: **14.09.2005**
(21) Application number: 05251421.3
(22) Date of filing: 09.03.2005
(51) Int. Cl.: H04N 5/775

(54) **Optical reproducing apparatus and method generating a DVI digital signal**

(30) Priority: 09.03.2004 KR 2004015719
(71) Applicant: SAMSUNG ELECTRONICS CO., LTD., Gyeonggi-do (KR)
(72) Inventor: Jeon, Hyoung-woo, 515-1301, Sinnamusil Jugong Apt., Gyeonggi-do (KR); Lee, Tae-hee, 513-601, Seongnam-maeul Byeoksan, Yongin-si Gyeonggi-do (KR)
(74) Representative: Robinson, Ian Michael

(57) **Abstract**

An optical reproducing apparatus (200) and method. The optical reproducing apparatus (200) includes an optical drive (102) for reading data stored in an optical medium (100), a digital signal processor and controller (104) for decoding the read data, a signal converter (106) for signal-converting the decoded data into a signal of a certain format, and a digital visual interface DVI (108) for converting and outputting the converted signal into a digital signal compliant to a DVI specification. Accordingly, the data recorded in the optical medium (100) is reproduced and output as a digital signal compliant to the DVI specification.

## Description

Embodiments of the present invention generally relate optical reproducing apparatuses and methods. More particularly, embodiments of the present invention relate to optical reproducing apparatuses and methods generating a digital signal complying with a digital visual interface (DVI) specification by reproducing data recorded on an optical medium.

A recordable medium may be a writable, erasable, and/or rewritable medium having data recorded thereon, e.g., data stored on an optical recordable medium. As further example, the medium may be a compact disc (CD) and a digital versatile disc (DVD), and recently the advanced optical disc (AOD) and blue-ray disc (BD) are being developed as high-density optical media. An optical reproducing and/or recording apparatus reproduces and or records data recorded on such an optical medium. An example of the optical reproducing apparatus would be a DVD player (DVDP).

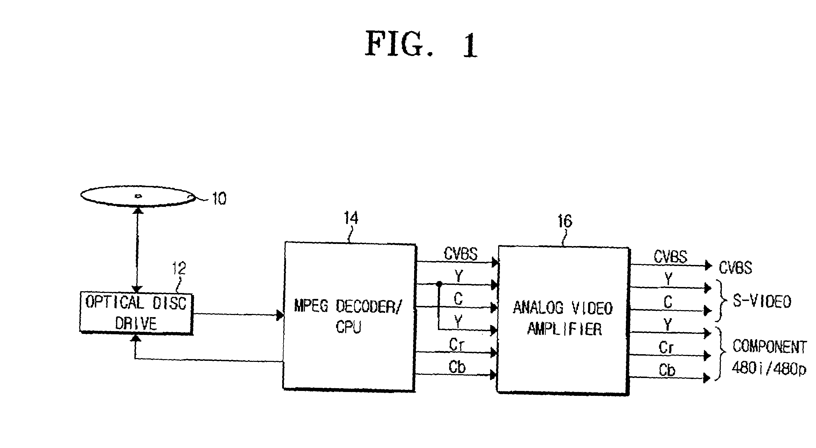

Figure 1 is a block diagram of a conventional optical reproducing apparatus, especially, the DVDP. Referring to FIG. 1, the DVDP includes an optical disc drive 12, a Moving Picture Experts Group (MPEG) decoder/CPU 14, and an analog video amplifier 16.

The optical disc drive 12 reads out data stored on an optical disc 10, e.g., a DVD. The MPEG decoder/CPU 14 performs MPEG decoding with respect to the data output from the optical disc drive 12, and controls overall operations of the OVDP including the optical disc drive 12. The analog video amplifier 16 amplifies the output signal of the MPEG decoder/CPU 14 and generates an output analog video signal, such as a composite video broadcast signal (CVBS), S-Video, and/or component signal.

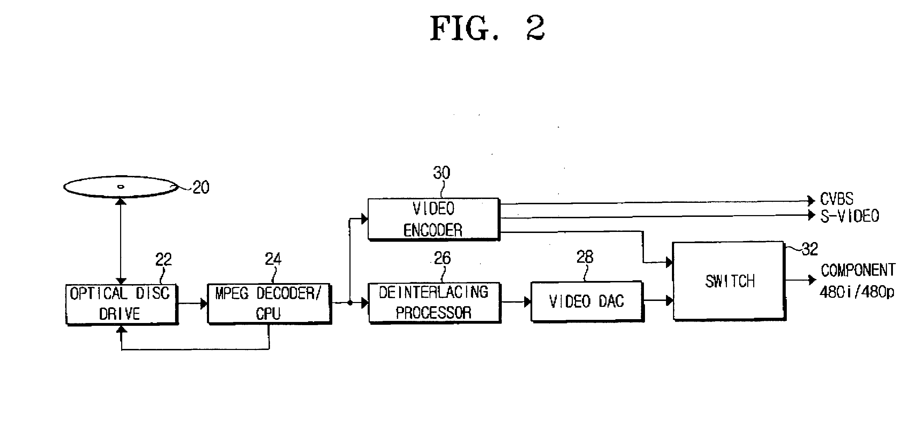

Figure 2 is a block diagram of another conventional optical reproducing apparatus, again using the DVDP as an example. Referring to Figure 2, the DVDP includes an optical disc drive 22, a MPEG decoder/CPU 24, a deinterlacing processor 26, a video digital-to-analog converter (DAC) 28, a video encoder 30, and a switch 32. The optical disc drive 22 and the MPEG decoder/CPU 24 perform similar functions as in Figure 1. The deinterlacing processor 26 performs a deinterlacing of data decoded and output from the MPEG decoder/CPU 24, and converts the deinterlaced data into a signal with a progressive scan. The video DAC 28 converts deinterlaced signal to an analog signal. The video encoder 30 then generates a video signal, such as the CVSB and the S-Video, from the signal output from the MPEG decoder/CPU 24. The switch 32 generates the component signal from the output signals of the video encoder 30 and the video DAC 28.

However, the conventional optical reproducing apparatuses of Figures 1 and 2 generate only the analog video signal, such as the CVBS, the S-Video, and/or the component signal. Thus, the conventional optical reproducing apparatus is limited in efficiently supporting digital displays such as liquid crystal display (LCD) monitors or digital televisions, which support digital interfaces and preferably process the input signal digitally.

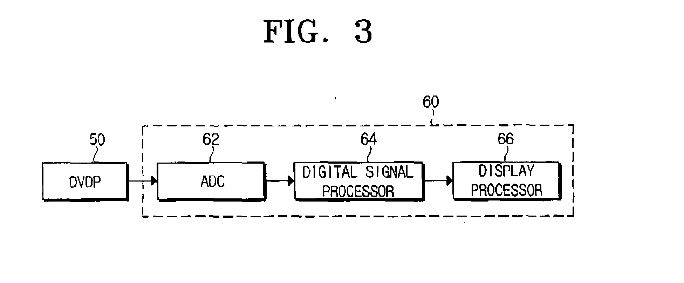

Referring to Figure 3, a digital display 60 converts the analog video signal, output from a DVDP 50, into the digital signal through an analog-to-digital converter (ACD) 62. The converted digital signal can then be displayed on a screen through a digital signal processor 64 and a display processor 66. That is, the analog video signal, which is generated through the DA conversion in the DVDP 50, is re-converted to the digital video signal through the AD conversion by the digital display 60. Hence, two signal conversions are required for the display. The conventional optical reproducing apparatus has another disadvantage, in that the number of pixels has to be determined using a scaler depending on the screen size of the digital display 60. As a result, the image quality degrades when the digital display 60 reproduces the data recorded on the optical medium such as the DVD.

According to the present invention there is provided an apparatus and method as set forth in the appended claims. Preferred features of the invention will be apparent from the dependent claims, and the description which follows.

To overcome disadvantages of the above conventional arrangement, an exemplary aspect of the present invention provides an optical reproducing apparatus generating a digital signal for a digital display supporting a digital interface, by reproducing data recorded on an optical medium, and a method thereof.

Additional aspects and/or advantages of the invention will be set forth in part in the description which follows and, in part, will be obvious from the description, or may be learned by practice of the invention.

To achieve the above and/or other aspects and advantages, embodiments of the present invention set forth a reproducing apparatus, comprising: an drive to read a data stored in a medium, a digital signal processor and controller to decode the read data, a signal converter to signal-convert the decoded data into a digital video signal of a predetermined format, and a digital visual interface (DVI) to convert and output the converted signal as a digital signal compliant with a DVI specification.

The medium may be an optical medium and the drive may be an optical drive.

In addition, the digital signal processor and controller may generate a standard analog video signal by decoding the read data. Similarly, the standard analog video signal may be at least one of a composite signal, a S-Video, and/or a component signal.

The digital signal processor and controller may control operations of the drive, the signal converter, and the DVI to at least, respectively, read the data from the medium, convert the read data, and output the digital video signal.

Further, the signal converter may include a deinterlacing processor to deinterlace the decoded data into a signal of with progressive scanning, and a scaler for generating the converted signal by scaling the converted signal of the progressive scanning into a certain resolution.

The medium may be also at least one of a digital versatile disc (DVD), a compact disc (CD), an ADO, and/or a BD.

The DVI may further include at least two links to increase a maximum pixel transmission rate for a single link, with the increased pixel transmission being compatible with a digital display.

In another aspect of the present invention there is provided a reproducing system generating both an analog video signal and a digital video signal, without the digital video signal being generated from an analog-to-digital conversion of the analog video signal, including a digital signal processor and controller to decode read data and to generate the analog video signal by decoding the read data, a signal converter to signal-convert the decoded data into the digital video signal of a predetermined format, and a digital visual interface (DVI) to convert and output the converted signal as a digital signal compliant with a DVI specification, with the output digital signal having a pixel transmission rate greater than an appropriate transmission rate of the predetermined format.

The system may further include an optical driver to perform the reading of the read data from an optical medium, and the greater transmission rate may be a doubled transmission rate.

To achieve the above and/or other aspects and advantages, embodiments of the present invention set forth a reproducing method, including reading data stored in a medium, decoding the read data, signal-converting the decoded data into a digital video signal of a predetermined format, and converting and outputting the converted signal into a digital signal compliant with a DVI specification. The medium may be an optical medium, e.g., at least one of a digital versatile disc (DVD), a compact disc (CD), a AOD, and/or a BD.

The method may further include generating a standard analog video signal by decoding the read data, wherein the standard analog video signal may also be at least one of a composite signal, a S-Video, and/or a component signal.

The signal conversion of the decoded data may include deinterlacing the decoded data as a signal of with progressive scanning, and generating the digital video signal of the predetermined format by scaling the progressive scanning signal into a certain resolution.

Lastly, the converting and outputting of the converted signal may increases a maximum pixel transmission rate for a single link of the DVI specification, with the increased pixel transmission being compatible with a digital display.

These and/or other aspects and advantages of the invention will become apparent and more readily appreciated from the following description of the embodiments, taken in conjunction with the accompanying drawing figures of which:
Figure 1 is a block diagram of a conventional DVD player;
Figure 2 is a block diagram of another conventional DVD player;
Figure 3 is a block diagram of the conventional DVDP and a connected digital display;
Figure 4 is a block diagram of an optical reproducing apparatus, according to an embodiment of the present invention;
Figure 5 is a flowchart of an operation of an optical reproducing process, according to an embodiment of the present invention; and
Figure 6 is a block diagram of an optical reproducing apparatus and a connected digital display device, according to an embodiment of the present invention.

Reference will now be made in detail to embodiments of the present invention, examples of which are illustrated in the accompanying drawing figures, wherein like reference numerals refer to the like elements throughout. The embodiments are described below in order to explain the present invention by referring to the drawing figures.

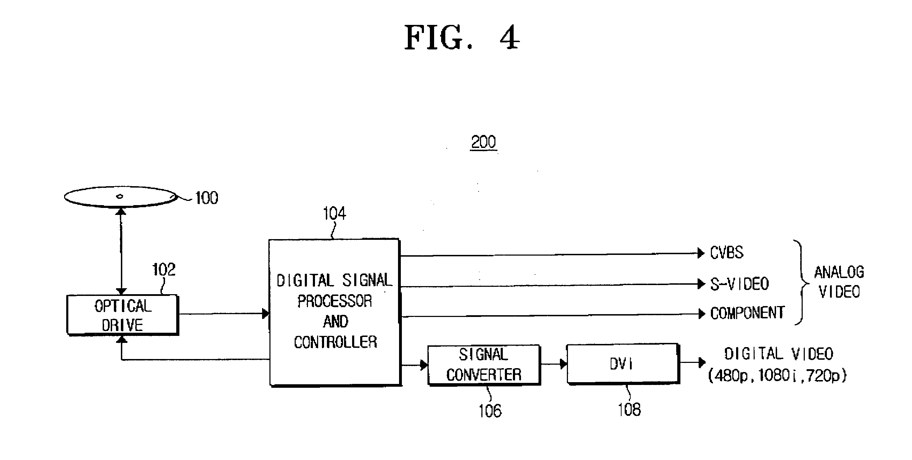

Figure 4 is a block diagram of an optical reproducing apparatus, according to an embodiment of the present invention. Referring to Figure 4, the optical reproducing apparatus 200 includes an optical drive 102, a digital signal processor and controller 104, a signal converter 106, and a digital visual interface (DVI) 108.

The optical drive 102 reads data stored on an optical medium 100 such as an optical disc. The digital signal processor and controller 104 performs MPEG decoding of the data read in the optical drive 102, and controls overall operations in the optical reproducing apparatus 200 including the optical drive 102. The digital signal processor and controller 104 converts and outputs the decoded signal into an analog video signal such as a composite video broadcast signal (CVBS), a S-Video signal having a luminance signal (Y) and a chrominance signal (C), and a component signal having a luminance signal (Y) and two chrominance signals (Cb and Cr).

The signal converter 106 generates a video signal of a progressive scanning by deinterlacing the signal output from the digital signal processor and controller 104, and converts it into a video signal having diverse resolutions by scaling the signal. The DVI 108 converts and outputs the signal output from the signal converter 106 into a digital signal compliant to a DVI specification.

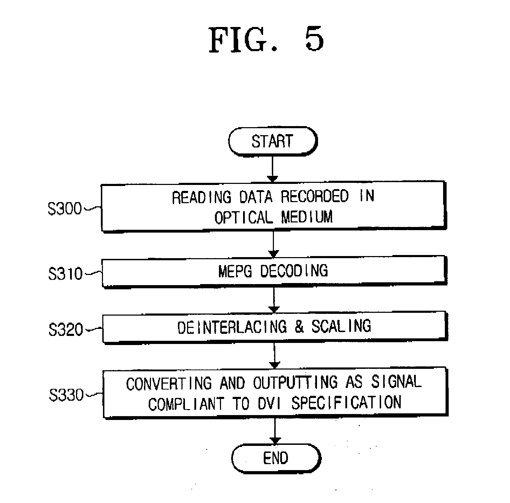

Figure 5 is a flowchart illustrating reproduction of data recorded in the optical medium 100, by the optical reproducing apparatus 200, and a digital signal compliant with the DVI specification. Referring to Figures 4 and 5, the optical drive 102 reads the data stored on the optical medium 100 such as the optical disc, in operation S300. The digital signal processor and controller 104 decodes the data read by the optical drive 102, in operation S310. If the optical medium 102 is a digital versatile disc (DVD), MEPG decoding is performed. The data decoded in the digital signal processor and controller 104 is then sent to the signal converter 106. The signal converter 106 performs the deinterlacing and the scaling of the received signal, in operation S320, and generates a signal with progressive scanning having diverse resolutions.

The DVI 108 converts and outputs the data output from the signal converter 106 into the digital video signal compliant to the DVI specification, in operation S330. The DVI, which may be created by the Digital Display Working Group (DDWG), is an interface for connecting with a digital display apparatus. The DVI features high compatibility by using a transition minimized differential signaling (TMDS) protocol. While a maximum resolution of a P&D for a digital flat panel (DFP) may be limited to 1280 x 1024, the DVI can support resolutions of more than 1280 x 1024 by increasing the maximum pixel transmission rate by two times, since the DVI can have more than one DVI link. The DVI 108 can also be implemented using a chip such as Sil 170B of the Silicon Image Inc.

As result, the optical reproducing apparatus 200 can convert a standard definition (SD) video of 480i recorded on a DVD title into the high definition (HD) video of 1080i and 720P through the DVI 108 and can also output the converted video in the digital form.

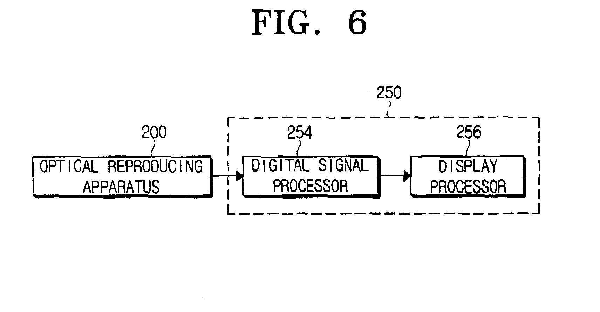

Figure 6 is a block diagram illustrating an optical reproducing apparatus 200 connected with a digital display apparatus, according to an exemplary embodiment of the present invention. Referring to Figure 6, the data recorded in the optical medium is reproduced by the optical reproducing apparatus 200 and a digital video signal compliant to the DVI specification can be output. The digital display apparatus 250 can signal-process the input video signal without performing AD conversion, through a digital signal processor 254, and display the video signal on a screen through a display processor 256. In particular, the digital signal compliant with the DVI specification can be input to the digital display apparatus 250, without being converted into the analog signal, compared to the analog video signal of the conventional methods. Thus, losses due to the transmission or the signal conversion can be reduced and image quality enhanced. In light of the digital display apparatus 250, there is also no need to accommodate an analog-to-digital converter (ADC), and therefore, manufacturing costs can be reduced.

An optical reproducing apparatus according, to exemplary embodiment of the present invention, may further be capable of outputting an optimized image quality no matter what kind of video signal is input, by adopting a directional correlational de-interlacing (DCDi) algorithm, which is a video signal conversion technology. Accordingly, the optical reproducing apparatus can output all kinds of video signals/resolutions such as a HD video of 1080i and 720P and SD video of 480P and 480i. The optical reproducing apparatus can support not only a digital display apparatus such as a HDTV and desktop video (DTV) but can also still support an analog display apparatus such a general Tv and a cathode ray tube (CRT) monitor.

In light of the foregoing, since the optical reproducing apparatus reproduces data stored in the optical medium and outputs the data as a digital signal compliant with the DVI specification, the image quality displayed by a digital display apparatus is enhanced. In addition, it is possible to output all kinds of videos such as HD video of 1080i and 720P and SD video of 480P and 480i by use of the scaler. Furthermore, the optical reproducing apparatus can still be compatible with the analog display apparatus.

Although a few embodiments of the present invention have been shown and described, it would be appreciated by those skilled in the art that changes may be made in these embodiments without departing from the principles and spirit of the invention, the scope of which is defined in the claims and their equivalents.

## Claims

1. A reproducing apparatus (200), comprising:
a drive (102) to read data stored in a medium (100);
a digital signal processor and controller (104) to decode the read data;
a signal converter (106) to signal-convert the decoded data into a digital video signal of a predetermined format; and
a digital visual interface DVI (108) to convert and output the converted signal as a digital signal compliant with a DVI specification.

2. The reproducing apparatus of claim 1, wherein the medium (100) is an optical medium and the drive (102) is an optical drive.

3. The optical reproducing apparatus (200) of claim 1 or 2, wherein the digital signal processor and controller (104) generate a standard analog video signal by further decoding the read data.

4. The optical reproducing apparatus (200) of claim 3, wherein the standard analog video signal is at least one of a composite signal, a S-Video, and/or a component signal.

5. The optical reproducing apparatus (200) of any preceding claim, wherein the digital signal processor and controller (104) controls operations of the drive (102), the signal converter, and the DVI to at least, respectively, read the data from the medium, convert the read data, and output the digital video signal.

6. The reproducing apparatus (200) of any preceding claim, wherein the signal converter comprises:
a deinterlacing processor to deinterlace the decoded data into a signal with progressive scanning; and
a scaler for generating the converted signal by scaling the signal with progressive scanning into a certain resolution.

7. The reproducing apparatus (200) of any preceding claim, wherein the medium is at least one of a digital versatile disc (DVD), a compact disc (CD), an advanced optical disc (ADO), and/or a blue-ray disc (BD).

8. The reproducing apparatus (200) of any preceding claim, wherein the DVI comprises at least two links to increase a maximum pixel transmission rate for a single link, with the increased pixel transmission being compatible with a digital display.

9. A reproducing system generating both an analog video signal and a digital video signal, without the digital video signal being generated from an analog-to-digital conversion of the analog video signal, comprising:
a digital signal processor and controller (104) to decode read data and to convert the decoded read data into the analog video signal by decoding the read data;
a signal converter to signal-convert the decoded data into the digital video signal of a predetermined format; and
a digital visual interface DVI (108) to convert and output the converted signal as a digital signal compliant with a DVI specification, with the output digital signal having a pixel transmission rate greater than an appropriate transmission rate of the predetermined format.

10. The optical reproducing apparatus (200) of claim 9, wherein the analog video signal is at least one of a composite signal, a S-Video, and/or a component signal

11. The reproducing system of claim 9 or 10, further comprising an optical driver (102) to perform the reading of the read data from an optical medium.

12. The reproducing system of claim 9 or 10, wherein the greater transmission rate is a doubled transmission rate.

13. A reproducing method, comprising:
reading data stored in a medium;
decoding the read data;
signal-converting the decoded data into a digital video signal of a predetermined format; and
converting and outputting the converted signal into a digital signal compliant with a DVI specification.

14. The reproducing method of claim 13, wherein the medium is an optical medium.

15. The reproducing method of claim 13 or 14, further comprising generating a standard analog video signal by decoding the read data.

16. The reproducing method of claim 15, wherein the standard analog video signal is at least one of a composite signal, a 5-Video, and/or a component signal.

17. The reproducing method of claim 13, 14, 15 or 16, wherein the signal conversion of the decoded data further comprises:
deinterlacing the decoded data as a signal with progressive scanning; and
generating the digital video signal of the predetermined format by scaling the signal with progressive scanning into a certain resolution.

18. The reproducing method of any of claims 13 to 17, wherein the medium may be at least one of a digital versatile disc (DVD), a compact disc (CD), an advanced optical disc (AOD), and/or a blue-ray disc (BD).

19. The reproducing method of any of claims 13 to 18, wherein the converting and outputting of the converted signal increases a maximum pixel transmission rate for a single link of the DVI specification, with the increased pixel transmission being compatible with a digital display.
